**Europäisches Patentamt**

**European Patent Office**

**Office européen des brevets**

(19)

(11) Veröffentlichungsnummer : **0 103 044**
**B1**

(12) EUROPÄISCHE PATENTSCHRIFT

(45) Veröffentlichungstag der Patentschrift :
28.05.86

(21) Anmeldenummer : 82108492.8

(22) Anmeldetag : 15.09.82

(51) Int. Cl.⁴ : **B 21 D 53/16**

(54) Verfahren zur Herstellung von Ringformkörpern, insbesondere Synchronringrohlingen.

(43) Veröffentlichungstag der Anmeldung :
21.03.84 Patentblatt 84/12

(45) Bekanntmachung des Hinweises auf die Patenterteilung : 28.05.86 Patentblatt 86/22

(84) Benannte Vertragsstaaten :
AT CH DE FR GB IT LI SE

(56) Entgegenhaltungen :
DE-A- 3 025 791
DE-B- 2 550 617
US-A- 1 760 558
US-A- 2 319 740
US-A- 4 010 831

(73) Patentinhaber : **Breme, Jürgen, Dr.**
**Hermann-Löns-Strasse 15**
**D-8523 Baiersdorf (DE)**

(72) Erfinder : **Breme, Jürgen, Dr. Dipl.-Ing.**
**Hermann-Löns-Strasse 15**
**D-8523 Baiersdorf (DE)**
Erfinder : **Wadewitz, Rainer**
**Am Rudolfshof 4**
**D-8560 Lauff an der Pegnitz (DE)**

(74) Vertreter : **Vollrath, Ulrich, Dr.-Ing.**
**Am Röttgen 48**
**D-4040 Neuss 1 (DE)**

## Beschreibung

Die Erfindung betrifft ein Verfahren zur Herstellung von Synchronringformkörpern gemäß Oberbegriff von Anspruch 1. Ein solches Verfahren ist Stand der Technik.

Bei diesem bekannten Verfahren wird ein Rohr aus Sondermessing durch Warmstrangpressen auf die Abmessungen (Durchmesser, Wandstärke) des Synchronringrohlings umgeformt. Anschließend werden von dem Rohr scheibenförmige Rohlinge abgetrennt, aus denen Synchronringe geschmiedet werden. Dieses Verfahren weist mehrere Nachteile auf. Aufgrund nicht beherrschbarer Strangpreßfehler, z. B. Dopplungen, Blasen, Überlappungen, ergeben sich bekanntlich am stranggepreßten Rohr und hier insbesondere an den Rohrenden, erhebliche Abfälle (Verschnitt). Hinzu kommt weiterer Verschnitt, der sich insbesondere bei spanendem Abtrennen der Rohlinge vom Rohr ergibt, so daß insgesamt nur ein geringer Teil des eingesetzten Strangpreßbarrens und damit des stranggepreßten Rohres als Rohling zu Synchronringen verarbeitet werden kann. Die Verschleißfestigkeit der Synchronringe wird bei Verwendung von Sondermessing durch stäbchenförmig ausgeschiedene Silizide herbeigeführt. Bei dem bekannten Verfahren ordnen sich diese verschleißmindernden Silizide durch die Formgebung mit ihrer Längsachse in Längsrichtung (axial) der Wand des Rohres an. Dies ist von erheblichem Nachteil, da auf diese Weise die Längsachse der Silizide quer zur Richtung der Verschleißbeanspruchung während des späteren Einsatzes der Synchronringe im Betrieb angeordnet wird, so daß nur ein geringer Teil der verschleißmindernden Eigenschaften zum Tragen kommt.

Der Erfindung liegt daher die Aufgabe zugrunde, ein Verfahren der eingangs genannten Art zu schaffen, das eine wirtschaftlichere Materialverwertung gestattet und die Herstellung von Synchronringformkörpern mit verbesserter verschleißmindernder Wirkung erlaubt.

Die Lösung dieser Aufgabe erfolgt durch die kennzeichnenden Merkmale des Anspruchs 1.

Ein Flachdraht mit den Abmessungen (Querschnittsbreite und -höhe) des Rohlings kann durch spanlose Formgebung, z. B. Strangpressen, Walzen, auf sehr wirtschaftliche Weise hergestellt werden. Beispielsweise läßt sich Sondermessing leicht umformen. Ein Vorteil besteht in der Herstellung eines Halbzeugs mit einem Vollquerschnitt. Dabei treten beispielsweise keine Preßfehler auf. Der Verschnitt z. B. für Materialrücklauf kann auf ca. 5 % begrenzt werden. Der Flachdraht wird einem Biegevorgang unterworfen, durch den die runde Form des Rohlings eingestellt wird. Schließlich werden die beiden Enden (Stoßkanten, Schnittkanten) des Flachdrahtes miteinander verbunden. Ein besonderer Vorteil besteht dabei darin, daß sich die Sizilide bei der spanlosen Formgebung mit ihrer Längsrichtung in der Umformrichtung anordnen.

Dadurch sind die Silizide auch im Rohling und damit im Synchronring in Umfangsrichtung (tangential) und damit in Richtung der Reibung angeordnet, so daß dadurch eine optimal verschleißmindernde Wirkung verwirklicht ist.

Vorzugsweise wird der Flachdraht vor der Biegung in Abschnitte abgelängt, deren Länge der Umfangslänge der Rohlinge entspricht Anspruch 2. Eine solche Unterteilung kann vorteilhaft durch spanende Trennung, z. B. Sägen, Schleifen, erfolgen. Nach einer weiteren bevorzugten Ausführungsform wird der Flachdraht nach der Biegung abgelängt. Dabei kann der Flachdraht zunächst um einen Kern gewickelt werden, dessen Außendurchmesser dem Innendurchmesser des Rohlings entspricht. Dieser Vorgang kann mit hoher Geschwindigkeit vorgenommen werden. Anschließend werden durch eine Trennung, z. B. einen Längsschnitt von außen durch die aufgewickelten Wendeln des Flachdrahtes an einer Stelle ihres Umfangs offene Ringe hergestellt, deren offene Enden schließlich verbunden werden. Die Wendeln können auch erst von Kern abgestreift und dann durch Sägen getrennt werden, wodurch die an einer Stelle offenen ringförmigen Rohlinge entstehen. Der Flachdraht wird auf besonders wirtschaftliche Weise durch Strangpressen hergestellt. Es kann aber auch vorteilhaft sein, den Flachdraht durch Walzen herzustellen, beispielsweise zur Erzeugung einer Querschnittsprofilierung. Zweckmäßig werden die Enden des gebogenen Flachdrahtes, z. B. die Schnittkanten, auf wirtschaftliche Weise durch Schweißen miteinander verbunden. Bevorzugt werden die Enden durch Preßschweißen, z. B. HF-Schweißen, verbunden (Anspruch 3), weil dadurch die Verwendung andersartigen Schweißmaterials entfällt.

Die Erfindung wird nachfolgend anhand von zeichnerisch dargestellten Ausführungsbeispielen näher erläutert.

Es zeigt:

Figur 1 einen Flachdraht mit schematischer Darstellung der eingelagerten Silizide,

Figur 2a einen abgelängten, geraden Flachdraht,

Figur 2b den Flachdraht nach Fig. 2a in gebogenem Zustand,

Figur 3a einen um einen Kern gewickelten Flachdraht,

Figur 3b den Flachdraht nach Fig. 3a in abgelängtem Zustand und

Figur 4 einen Synchronringrohling mit Schweißnaht.

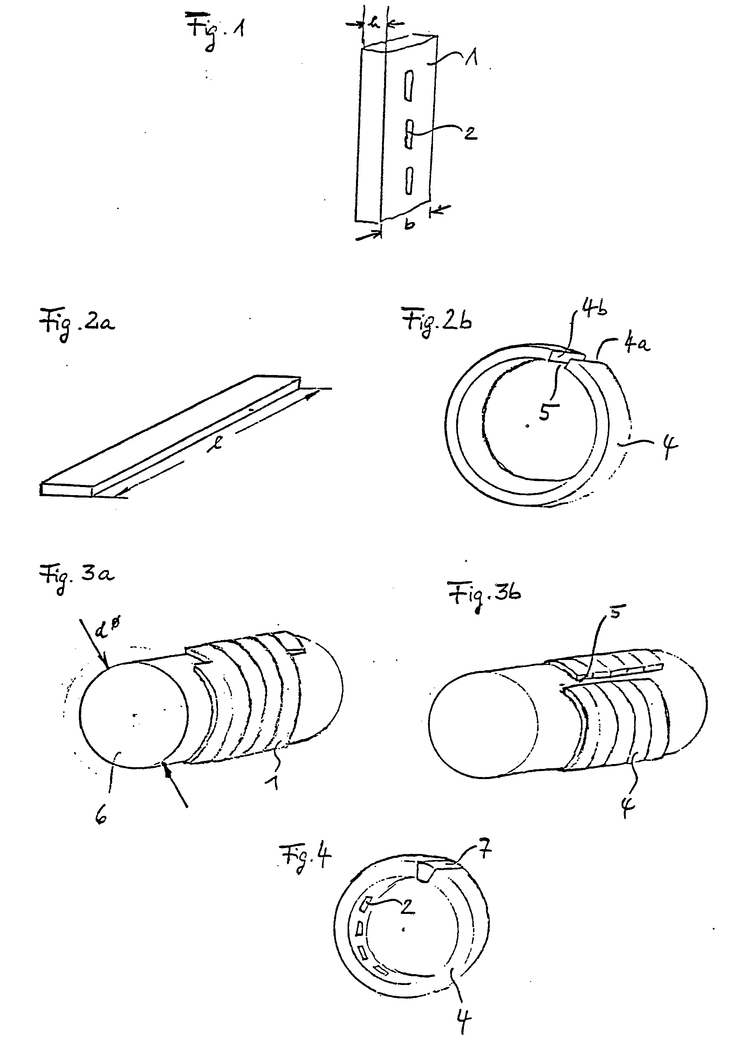

Figur 1 zeigt einen Flachdraht 1 mit einer Breite (b) von 10 mm und einer Höhe (h) von 5 mm, der z. B. durch Strangpressen hergestellt wurd. Mit 2 sind Silizide bezeichnet, deren Längsrichtung beim Umformen in Längsrichtung des Flachdrahtes ausgerichtet werden.

Nach Figur 2a ist von dem Flachdraht 1 durch Sägen ein Teilstück 3 mit einer Länge (1) von 250 mm abgetrennt worden, wobei die Länge (1) dem Umfang des Synchronringrohlings entspricht.

Das Teilstück 3 ist nach Figur 2b zu einem Ring 4 auf an sich bekannte Weise gebogen, zwischen dessen Enden 4a, 4b ein offener Zwischenraum 5 vorhanden ist.

Figur 3a zeigt einen zylindrischen Kern 6, dessen Aussendurchmesser (d) dem Innendurchmesser (d) des Kreisringrohlings entspricht. Um diesen Kern 6 wird der Flachdraht 1 eng gewickelt und dadurch gebogen. Anschließend wird nach Figur 3b von außen in die Wendeln des Flachdrahtes ein Längsschnitt eingesägt, wodurch die Ringe 4 mit dem offenen Zwischenraum 5 gebildet werden.

Schließlich werden nach Figur 4 die Enden 4a, 4b durch Auffüllen des Zwischenraumes 5 mit Schweißgut 7 verbunden, so daß auf diese Weise der Synchronringrohling 4 entsteht. In Figur 4 ist außerdem schematisch dargestellt, daß die Längsrichtung der Silizide in Umfangsrichtung (tangential) des Ringkörpers 4 (Synchronringrohling) angeordnet sind. Der Ringkörper 4 hat einen Außendurchmesser D von 80 mm.

Als Sondermessing kann beispielsweise eine CuZn 40 Al 2 — Legierung verwendet werden, der z. B. Mn und Si zulegiert sein können.

### Patentansprüche

1. Verfahren zur Herstellung von Synchronringformkörpern, bei dem durch spanlose Formgebung ein Halbzeug aus Sondermessing hergestellt wird, aus dem unter Einsatz mechanischer Bearbeitung ein Synchronringformkörper mit kreisförmigem Querschnitt gebildet wird, dadurch gekennzeichnet, daß ein Flachdraht aus Sondermessing mit eingelagerten Hartstoffen hergestellt wird, der zu einer Ringform derart gebogen wird, daß die eingelagerten Hartstoffe mit ihrer Längsachse in Umfangsrichtung des Ringformkörpers angeordnet sind und daß anschließend die offenen Enden zu den geschlossenen Synchronringformkörper verbunden werden.

2. Verfahren nach Anspruch 1, dadurch gekennzeichnet, daß der Flachdraht vor der Biegung abgelängt wird.

3. Verfahren nach Anspruch 1 oder 2, dadurch gekennzeichnet, daß die Enden des gebogenen Flachdrahtes durch Preßschweißen verbunden werden.

### Claims

1. Method for the manufacture of synchronizing ring bodies, in which there is produced, by forming, a semi-finished product of high-strength brass from which a synchronizing ring body having a circular cross-section is produced by machining, characterised in that there is produced a flat wire of high-strength brass in which are incorporated hard materials, which flat wire is bent into a ring shape in such a manner that the incorporated hard materials are arranged with their longitudinal axes in the circumferential direction of the ring body, and in that the open ends are subsequently connected to form the closed synchronizing ring bodies.

2. Method according to claim 1, characterised in that the flat wire is cut to length before being bent.

3. Method according to claim 1 or 2, characterised in that the ends of the bent flat wire are connected by pressure welding.

### Revendications

1. Procédé de fabrication de corps façonnés sous forme d'anneaux ou bagues de synchronisation, selon lequel on élabore par mise en forme sans enlèvement de copeaux un demi-produit en laiton spécial, d'où on forme un corps façonné sous forme d'une bague de synchronisation de section circulaire en appliquant un usinage mécanique, caractérisé en ce que l'on élabore un fil plat en laiton spécial avec des inclusions de constituants durs, que l'on courbe en une forme annulaire, de manière que les constituants durs soient orientés avec leur axe longitudinal dans le sens de la circonférence du corps façonné annulaire et que, ensuite, on réunit les extrémités du fil courbé pour produire un corps façonné sous forme d'une bague de synchronisation fermée.

2. Procédé selon la revendication 1, caractérisé en ce que l'on coupe le fil plat à longueur avant la courbure.

3. Procédé selon la revendication 1 ou 2, caractérisé en ce que l'on réunit les extrémités du fil plat courbé par soudage par compression.

Fig. 1

Fig. 2a

Fig. 2b

Fig. 3a

Fig. 3b

Fig. 4